# EUROPEAN PATENT SPECIFICATION

(11) **EP 0 573 108 B1**
(45) Date of publication and mention of the grant of the patent: **08.03.2000**
(21) Application number: 93201524.1
(22) Date of filing: 27.05.1993
(51) Int. Cl.: H04B 3/04

(54) **Automatic cable attenuation compensation system**
System zur automatischen Kompensation der Kabeldämpfung
Système de compensation automatique de l'attenuation d'un câble

(30) Priority: 03.06.1992 EP 92201596
(43) Date of publication of application: 08.12.1993
(73) Proprietor: Koninklijke Philips Electronics N.V., 5621 BA Eindhoven (NL)
(72) Inventor: Koppe, Rudolf Pieter, NL-5656 AA Eindhoven (NL); Eck, Nicolaas Joseph Hubertus, NL-5656 AA Eindhoven (NL)
(74) Representative: Steenbeek, Leonardus Johannes

(56) References cited:
- EP-A- 0 178 821
- EP-A- 0 411 756

## Description

The invention relates to an automatic cable attenuation compensation system.

EP-A-0,178,821 discloses a programmable automatic cable equalizer with two AGC circuits. For long cables, the first AGC circuit has its gain fixed at a predetermined breakpoint value of its gain characteristic, and a second AGC circuit becomes active for gain control.

EP-A-0,411,756 discloses a radio telephone receiver with switched gain amplifiers which are controlled between a plurality of gain and/or attenuation levels which are set constant for a time slot of the Time Division Multiple Access system.

As a consequence of the skin effect, coax cable attenuation expressed in dB increases with the frequency of the transmitted signal in proportion to the root of this frequency. The attenuation is further dependent on, *inter alia*, the length and the diameter of the cable. Such an attenuation is especially disturbing when baseband video signals are transmitted, as in the case of transmission of double-sided amplitude modulated signals, the relatively less attenuated left side-band and the relatively more attenuated right side-band can be combined to obtain a substantially flat amplitude characteristic. Such an easy compensation is not available when baseband video signals are transmitted.

In applications where video signals have to be transmitted over relatively long coax cables of variable length, (semi-)automatic cable attenuation compensation systems are used. DE-A-31.48.242 discloses a system which determines the cable length at power-up to switch on a fixed compensation suitable for compensating the frequency-dependent attenuation within certain limits for one type of coax cable in steps of several meters. This step-wise compensation entails the drawback that any cable attenuation which is within the resolution of the attenuation compensation system is not compensated for, so that no optimal flat frequency characteristic for intermediate cable lengths is obtained. Further, such step-wise cable attenuation compensating systems may only be operative directly after power-up, because a step-wise adjustment of the compensation at a later stage would result in a disturbed picture. This entails the drawback that any temperature-dependent attenuation caused by temperature changes cannot be compensated for.

On the other hand, US-A-3,431,351 discloses an automatic frequency characteristic correction system which provides a continuous compensation of the frequency-dependent attenuation. The compensation range of such a continuously operative compensator is, however, rather small, so that no adequate compensation is obtained when the attenuation effected by the cable falls outside this range.

It is, *inter alia,* an object of the invention to provide an improved automatic cable attenuation compensation system. For this purpose, a first aspect of the invention provides an automatic cable attenuation compensation system as defined in the main claim. Advantageous embodiments are defined in the subclaims.

As a consequence of the addition of the adaptive compensation part providing a continuously active compensation for a further accurate compensation of the cable attenuation, to the prior art stepwise adjustable fixed compensation part, both the remaining cable attenuation falling between the steps of the stepwise fixed compensation, and any temporal (temperature-dependent) variations in the attenuation, are corrected, while the overall system has a large correction range.

If the cable is a multi-core cable having a plurality of channels for, for example, R, G, and B signals, the adaptive compensation part advantageously includes a separate, independent adaptive compensator for each channel to avoid that mutual differences between the channels are not compensated for when the attenuation of only one channel is measured to obtain a control signal for all channels. In the compensation system of US-A-3,431,351, the compensation to be applied to one wire of the cable is based on a DC attenuation measured in another wire of the cable, with the disadvantage that the mutual differences between the wires are not taken into account.

A high quality flat frequency response is obtained if the adaptive compensation part includes a first automatic gain control for compensating for an attenuation of a low-frequency test signal included in the signal transmitted over the cable, and a high-frequency automatic gain control for compensating for an attenuation of a high-frequency test signal included in the signal transmitted through the cable.

These and other aspects of the invention will be apparent from and elucidated with reference to the embodiments described hereinafter.

In the drawings:
Fig. 1 shows an embodiment of an automatic cable attenuation compensation system in accordance with the present invention;
Fig. 2 shows an embodiment of a compensation section for use in the embodiment of Fig. 1; and
Fig. 3 shows a block circuit diagram of an automatic gain control circuit for use in the embodiment of Fig. 1.

In one embodiment of the invention, a first test signal having a continuous amplitude equal to the maximum value of the video signal is added to the video signal during at least one active line period in the vertical blanking interval, while a second test signal forming a sine wave of the same amplitude and a frequency of about 2/3 of the maximum pass-bandwidth is added to the video signal during at least one other active line period in the vertical blanking interval. For example, when the pass-bandwidth is 30 MHz, a frequency of 18 MHz is chosen, while a frequency between 3 and 5 MHz can be chosen with a pass-bandwidth of 5.5 MHz.

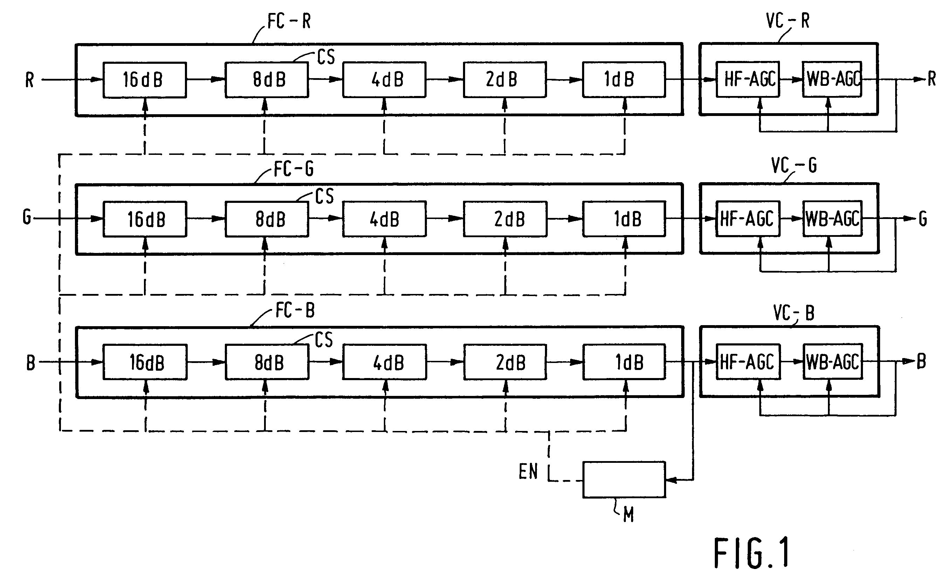

The automatic cable attenuation compensation system shown in Fig. 1 comprises in each channel R, G, B, a fixed compensation part FC-R, FC-G, FC-B, respectively, as well as variable compensation parts VC-R, VC-G, VC-B, respectively. The fixed compensation parts include a plurality of switchable compensation sections CS each capable of compensating for a predetermined amount of cable attenuation. At the highest frequency of the video band, one compensation section CS may compensate for 1 dB, 2 dB, 4 dB, 8 dB or 16 dB. The compensation section (CS 16 dB) providing the largest compensation may appear more than once.

In at least one channel, the blue channel B in the embodiment of Fig. 1, the cable attenuation compensation system comprises a sample and measuring circuit M furnishing enabling control signals EN through a control signal bus to enable the switchable compensation circuits CS. The line numbers of the first and second test signal lines are known to the system, so that the corresponding sampling signals for the test signals can be generated. The required switchable cable attenuation compensation is automatically determined at power-up. The compensation starts at 0 dB and is increased by steps of 1 dB (at the maximum frequency) until a reference level in the sample and measuring circuit M is obtained. The enabling control signals EN furnished by the sample and measuring circuit M ensure that this state is maintained. The start-up procedure is repeated after each interruption of the signal. More specifically, the amplitude of the sine wave second test signal is measured, and compensation sections CS are switched on and off in steps of 1 dB until the sine wave amplitude of the transmitted second test signal just exceeds the maximum video signal amplitude. Then, the measurement is finished and the measuring circuit M freezes its output control signals EN. If the video signal disappears, the measuring circuit M resets itself, so that the measurement is repeated when the video signal re-appears.

The variable compensation sections VC-R, VC-G, VC-B of the cable attenuation compensation system comprise in each channel R, G, B, a continuous (wide-band) automatic gain control amplifier WB-AGC for the complete signal and a continuous automatic gain control amplifier HF-AGC for the high-frequency part of the signal, whose amplification increases with the root of the frequency. Both AGC circuits HF-AGC, WB-AGC include sample circuits for the continuous amplitude first test signal and the sine wave second test signal, respectively, as well as the required continuous control circuits.

The maximum 1 dB deviation in the frequency-characteristic caused by the compensation magnitude of the smallest compensation section (CS 1 dB) of the fixed compensation parts FC-R, FC-G, FC-B, plus the mutual differences in cable attenuation of the different coax cables used in the multi-core cable, and the cable attenuation variations appearing during operation of the system caused, for example, by temperature variations of the cables or of the circuits employed, are measured in each channel R, G, B during each field period and compensated for by means of the two continuous AGC amplifiers in the variable compensation parts VC-R, VC-G, VC-B, so that the frequency characteristics of the signals remain optimally flat.

A novel feature provided by the present invention is the addition of continuously operational cable attenuation compensation systems in the variable compensation parts VC-R, VC-G, VC-B. The new system comprises the following major features:
1. The video signal compensation is fully automatic.
2. The video signals are individually and optimally compensated with a maximally flat frequency characteristic, notwithstanding mutual spread in properties of the coax cables used.
3. This optimal compensation operates continuously to remove attenuation variations in cables and circuits which are caused, for example, by temperature variations.
4. The system is capable of working with other cables without adjustments as long as the maximum cable attenuation is within the total range of the compensation circuits.
5. The system can be used in two directions, so that return video signals from the camera processing unit to the camera, such as viewfinder and teleprompter signals, are corrected too.

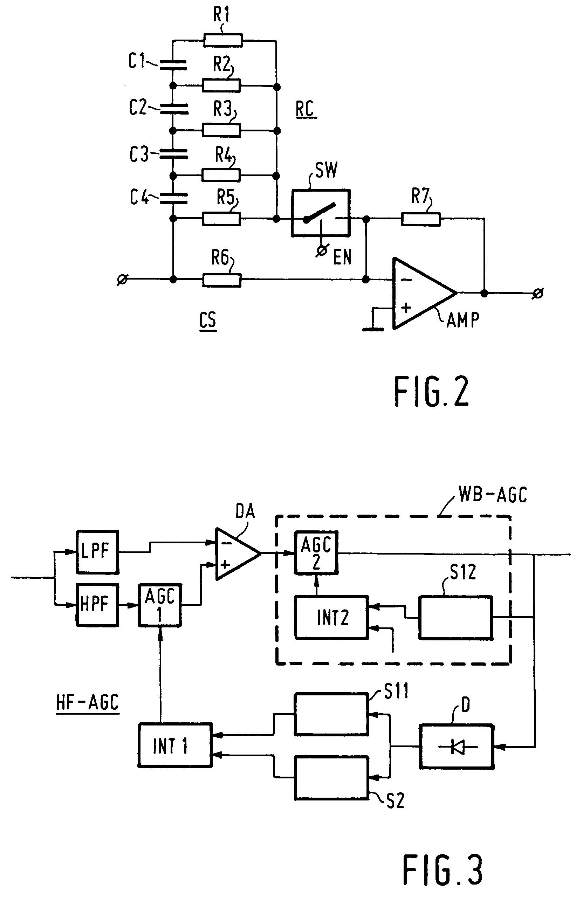

Fig. 2 shows an example of a compensation section CS suitable for use in the fixed compensation part of Fig. 1. The input of the section is coupled to an inverting input of an amplifier AMP through the parallel circuit of a resistor R6 and the series circuit of a filter RC and a switch SW controlled by the enabling control signal EN of the compensation section CS. The amplifier AMP is fed back by means of a resistor R7. The non-inverting input of the amplifier AMP is connected to earth, and its output is connected to the output of the compensation section CS. In dependence on the enabling control signal EN, such a section operates as an inverting buffer or as a cable compensation section. The RC filters R1, C1, R2, C2, R3, C3, R4, C4, R5 are designed in such a way that one section CS yields a maximal compensation of 16, 8, 4, 2 or 1 dB at 30 MHz, while the transfer function is proportional to the root of the frequency.

Fig. 3 shows a block circuit diagram of a combination of AGC circuits HF-AGC, WB-AGC suitable for use in the variable compensation parts VC-R, VC-G, VC-B. The input of the circuit HF-AGC is coupled to the inverting input of a differential amplifier (subtracter) DA through a low-pass filter LPF and to the non-inverting input of the amplifier DA through a high-pass filter HPF and an AGC circuit AGC1. The output of the amplifier DA forms the output of the circuit HF-AGC which is connected to the input of the circuit WB-AGC. The control signal for the circuit AGC1 is derived from the output signal of the automatic cable attenuation circuit at the output of the circuit WB-AGC in the following manner. The output signal is full-wave rectified by a rectifying circuit D, and subsequently sampled by a sampling circuit S11 which samples the continuous maximum amplitude first test signal and by a sampling circuit S2 which samples the sine wave second test signal. The difference between the sampled amplitudes of the first and second test signals is determined and integrated by a circuit Int1 which furnishes the control signal for the AGC circuit AGC1.

The circuit WB-AGC comprises an AGC circuit AGC2 whose input is coupled to the output of the circuit HF-AGC and whose output furnishes the output signal of the automatic cable attenuation circuit. The control signal for the circuit AGC2 is derived from this output signal by a sampling circuit S12 which samples the continuous maximum amplitude first test signal, and by a circuit Int2 which determines and integrates the difference between the sampled amplitude of the first test signal and a reference signal having the maximum amplitude of the video signal.

In a preferred embodiment of the automatic cable attenuation in accordance with the present invention, one of the goals was to automatically compensate for any cable length. This is realised by dividing the total compensation into a fixed part and an adaptive part.

The fixed part can compensate any cable length with a resolution of 12.5 m. This length is determined at power-up, by means of a successive approximation measurement, *viz.* the total compensation in the fixed part is increased until the (18 MHz) HF-burst signal amplitude in the vertical gap of one video channel is its original, known, value.

The adaptive part, which is independent in each channel and continuously active, has two functions:
1. It has to compensate the last few meters of the multi-core cable which are within the resolution of the fixed part.
2. It has to compensate (frequency dependent) loss differences which might be caused by, for instance, temperature changes of the multi-core cable and/or differences between the individual coaxes.

The invention thus provides a system for automatic continuous individual cable attenuation with optimum flat frequency response for baseband video signals transmitted via coax or multi-core cable.

It should be noted that the above-mentioned embodiments illustrate rather than limit the invention, and that those skilled in the art will be able to design many alternative embodiments without departing from the scope of the appended claims.

## Claims

1. An automatic cable attenuation compensation system, comprising:
a fixed attenuation compensation part (FC-R/G/B) being stepwise adjustable for providing a stepwise adjustable attenuation compensation to substantially compensate cable attenuation of a cable length, the stepwise adjustable attenuation compensation of the fixed compensation part being capable of being set after power-up, and
an adaptive attenuation compensation part (VC-R/G/B) comprising a continuous wide-band automatic gain control amplifier circuit (WB-AGC) for amplifying a complete signal, and a high-frequency continuous automatic gain control amplifier circuit (HF-AGC) for amplifying a high-frequency part of the signal, for providing a continuously active compensation for a further compensation of the cable attenuation for said cable length.

2. An automatic cable attenuation compensation system as claimed in claim 1, wherein said cable is a multi-core cable having a plurality of channels (R, G, B) and said adaptive compensation part (VC-R/G/B) includes a separate, independent adaptive compensator (VC-R, VC-G, VC-B) for each channel (R, G, B).

3. An automatic cable attenuation compensation system as claimed in claim 1, wherein said continuous wide-band automatic gain control amplifier circuit (WB-AGC) is capable of being controlled by means of a low-frequency test signal included in said signal transmitted through said cable, and said high-frequency continuous automatic gain control amplifier circuit (HF-AGC) is capable of being controlled by means of at least a high-frequency test signal included in said signal transmitted through said cable.

4. An automatic cable attenuation compensation system as claimed in claim 3, wherein said low-frequency test signal has a continuous high amplitude and said high-frequency test signal has a high-frequency sine wave signal with a high amplitude.

## Patentansprüche

1. System zur automatischen Kompensation der Kabeldämpfung, mit:
- einem festen Dämpfungskompensationsteil (FC-R/G/B), der schrittweise einstellbar ist zum Schaffen einer schrittweise einstellbaren Dämpfungskompensation zum im Wesentlichen Kompensieren von Kabeldämpfung einer Kabellänge, wobei die schrittweise einstellbare Dämpfungskompensation des festen Kompensationsteils imstande ist, nach Einschaltung eingestellt zu werden, und
- einem adaptiven Dämpfungskompensationsteil (VC-R/G/B) mit einer kontinuierlichen Breitband-AVR-Verstärkerschaltung (WB-AGC) zum Verstarken eines kompletten Signals, sowie einer kontinuierlichen HF-AVR-Verstärkerschaltung (HF-AGC) zum Verstärken eines HF-Teils des Signals, zum Schaffen einer ständig aktiven Kompensation für eine weitere Kompensation der Kabeldämpfung für die genannte Kabellänge.

2. System zur automatischen Kompensation der Kabeldämpfung nach Anspruch 1, wobei das genannte Kabel ein Mehrfachkernkabel ist mit einer Anzahl Kanäle (R, G, B) und wobei der genannte adaptive Kompensationsteil (VC-R/G/B) einen einzelnen, unabhängigen adaptiven Kompensator (VC-R, VC-G, VC-B) für jeden Kanal (R, G. B) hat.

3. System zur automatischen Kompensation der Kabeldämpfung nach Anspruch 1, wobei die genannte kontinuierliche Breitband-AVR-Verstärkerschaltung (WB-AGC) mit Hilfe eines NF-Testsignals in dem genannten, über das genannte Kabel übertragenen Signal gesteuert werden kann, und wobei die genannte kontinuierliche HF-AVR-Verstärkerschaltung (HF-AGC) mit Hilfe wenigstens eines HF-Testsignals in dem genannten über das genannte Kabel übertragenen Signal gesteuert werden kann.

4. System zur automatischen Kompensation der Kabeldämpfung nach Anspruch 3, wobei das genannte NF-Testsignal eine kontinuierlich hohe Amplitude hat und das genannte HF-Testsignal ein sinusförmiges HF-Signal hat mit einer hohen Amplitude.

## Revendications

1. Système de compensation automatique de l'atténuation d'un câble comportant:
une partie de compensation fixe d'atténuation (FC-R/G/B) étant réglable en des étapes pour fournir une compensation d'atténuation réglable en des étapes pour compenser sensiblement l'atténuation d'un câble d'une longueur de câble, la compensation d'atténuation réglable en des étapes de la partie de compensation fixe étant capable d'être réglée après la mise sous tension, et
une partie de compensation adaptive d'atténuation (VC-R/G/B) comportant un circuit amplificateur de commande de gain automatique à large bande continue (WB-AGC) pour amplifier un signal complet et un circuit amplificateur de commande de gain automatique continue à haute fréquence (HF-AGC) pour amplifier une partie haute fréquence du signal pour fournir une compensation continûment active pour une nouvelle autre compensation de l'atténuation d'un câble pour ladite longueur de câble.

2. Système de compensation automatique de l'atténuation d'un câble selon la revendication 1, où ledit câble est un câble multiconducteur présentant une pluralité de canaux (R, G, B) et ou ladite partie de compensation adaptive (VC-R /G/B) renferme un compensateur individuel indépendent adaptif (VC-R, VC-G, VC-B) pour chaque canal (R, G, B).

3. Système de compensation automatique de l'atténuation d'un câble selon la revendication 1, où ledit circuit amplificateur de commande de gain automatique à large bande continue (WB-AGC) est capable d'être commandé au moyen d'un signal d'essai basse fréquence incorporé dans ledit signal émis à travers ledit câble et où ledit circuit amplificateur de commande de gain automatique continue à haute fréquence (HF-AGC) est capable d'être commandé au moyen d'au moins un signal d'essai haute fréquence incorporé dans ledit signal émis à travers ledit câble.

4. Système de compensation automatique de l'atténuation d'un câble selon la revendication 3, où ledit signal d'essai basse fréquence présente une amplitude élevée continue et où ledit signal d'essai haute fréquence présente un signal sinusoïdal haute fréquence avec une amplitude élevée.
